# EUROPEAN PATENT APPLICATION

(11) **EP 4 071 225 A1**
(43) Date of publication of application: **12.10.2022**
(21) Application number: 22386016.4
(22) Date of filing: 04.04.2022
(51) Int. Cl.: C11B 1/06, C11B 3/16

(54) **PROCESSING OF FRUITS WITH OILY FLESH FOR THE PRODUCTION OF FRUIT PULPS AND PASTES WITH LOW OIL CONTENT BY HYBRIDIZING THE HYDRAULIC DIRECT COLD PRESS PULPING METHOD WITH THE TWO PHASE DECANTER CENTRIFUGATION OIL EXTRACTION METHOD**

(30) Priority: 08.04.2021 GR 20210100242
(71) Applicant: Tzanakakis, Stylianos, 741 32 Rethymno Crete (GR)
(72) Inventor: Tzanakakis, Stylianos, 741 32 Rethymno Crete (GR)

(57) **Abstract**

This invention concerns on one hand a new pulping method resulting by the novel hybridization of direct cold press pulping method with the two phase decanter centrifugation oil extraction method , and on the other hand the synchronous co-production with this hybrid method of conventional oils and novel Pulps and Pastes having low oil content that constitute new organic food categories . The hybridization replaces the fruit milling step of two phase decanter centrifugation oil extraction process by the fruit hydraulic pressing step of hydraulic direct cold press method , so for avoiding on one hand the use of water during conventional malaxation step and on the other hand the rejection of any watery solid waste during decanter centrifugation step of oil extraction process . By collecting the fruit kernel and peel inside the compression cylinder of hydraulic press and by avoiding the use of malaxation water , during the two phase decanter centrifugation oil extraction processing, we attain synchronous co-production of nutritional oil and nutritional pulp of low oil content. So since the hybrid pulping method results of having co-production of nutritional oils and pulps, the attained mass-wise nutritional production efficiency is over than double compared to that of conventional decanter centrifugation oil extraction methods .

## Description

This invention concerns on one hand a new pulping method resulting by the novel hybridization of direct cold press pulping method with the two phase decanter centrifugation oil extraction method , and on the other hand the synchronous coproduction with this hybrid method of conventional oils and novel Pulps and Pastes having low oil content that constitute new organic food categories .

Today the pasting process of fruits with oily flesh includes substantially two phases, the one of pulping the fruits and the one of pasteurizing the pulp. Especially in the case of olive pastes, the above two phases procedure take place after the fundamental phase of debittering the olive fruits (mainly due to high levels of oleuropein) which concerns the keeping of the fruits immersed in brine tanks for a period of time of over six weeks (with intermediate changes of brine) and finally the rinsing of the fruits to remove salt. So the differentiation between pulps and pastes is that pulps are considered primary products of overall pasting processes (with the pastes to be secondary products ), that apart from the option to be used for the production of pastes , they are used independently without being pasteurized for the production of multi-ingredient food not having necessarily (for the end product) the initial semi-fluid texture of pulps.

Regarding the pulping of fruits with oily flesh , there exist several industrial and artisan processes on the market which apply (a) either rotation of fruits inside cylindrical perforated scrapers (b) either screw pressing of fruits that have priory been undergone Kernel removal and (c) or hydraulic direct cold pressing. Of these methods , the hydraulic direct cold press method is superior since on one hand produces pulps (from any kind of fruit with oily flesh ) with simultaneous removal of kernels and peel and on the other hand pulps any kind of fruit with oily flesh without requiring the fruits to haven been priory debittered in brine .

Regarding the oil extraction from fruits with oily flesh , the decanter centrifugation method is considered the most used oil extraction method on the market, that is suitable for fruits with oily flesh like Olive and Avocado . The decanter centrifugation oil extraction method has two variants (a) the one of three (3) phase decanter centrifugation and (b) the one of two(2) phase decanter centrifugation that is superior in both oil extraction efficiency , extracted oil quality and environmental friendliness.

In the market of pastes from oily fruits the dominant place belongs primarily to the olive pastes and secondarily to avovado pastes . By today both the olive and avocado pastes are produced with applying methods that are designed and established exclusively for the production of pulps without the prior production of oils that is overall without having coproduction of oils and pulps/pastes. So the pulps and pastes that are found today in the Market are of total oil content as regards the initial oil content of the processed oily fruit . Also regarding the nutritional processing of olive and avocado fruits , only a very small amount of them is purposed for the production of olive and avocado pulps since the nutritional mainstream is primarily the production of olive and avocado oils and secondarily the consumption of fruits as a whole . The main reason that the industry is focused on the production of fruit oils are nutritionally more (a) serviceable (b) easily and safely storable and (c) transportable than pulps and pastes.

The fundamental nutritional disadvantages of oils in comparison with pastes is on one hand their significantly lower content in health boosting ingredients that have been discharged as included the solid and liquid waste , and on the other hand that the oils due to their fluid texture cannot be efficiently utilized for the production of food that requires semi-fluid ingredients .

Today on of the fundamental principles of evaluating the environmental friendliness of food processing methods, is the mass-wise nutritional production efficiency of methods as determined with the ratio of the overall mass of produced nutritional products (for instance fruit oil and pulp) to the corresponding mass of initial raw matter (for instance fruit) that has been nutritionally processed . In that case the higher is the mass-wise nutritional production efficiency, then the less is the remains of initial processed matter that is considered as a waste requiring environmentally friendly disposal. Making anagoge of this fundamental principle in the case of processing olive fruit for oil extraction , it is obvious the very low the currently offered environmental friendliness of the well-established oil extraction methods (dominantly of decanter centrifugation methods) , since there are nutritionally focused only in the extraction of oils with offering mass-wise nutritional efficiency to be in the range of 30% with the balance 70% to be nutritionally disposed as waste . That 70% of olive mass that us characterized as waste (and widely named olive pomace) is able to be nutritionally utilized only in olive kernel oil plants for extracting another around 5% kernel oil of very low nutritional quality but with adding environmental problems . Alternatively that 70% of waste / olive pomace is environmentally utilized for the production of fertilizers but with also adding environmental issues as regards the ingress of high BOD/COD water content in soil .

In the market of oils and pastes purposed for nutritional use is known the value and the importance of low temperature and low impact from light and ambient air procedures , in order not to degrade the qualitative natural and chemical characteristics of the processed fruit that will be enclosed in the end-products . Especially for oily pulps and pastes , the basic qualitative criteria are the organoleptic characteristics (odor and taste), the oxidation, the color, the polyphenols as well as the lipophilic components . From these, the oxidation and the phenolic content which also constitute fundamental qualitative characteristics for all paste applications are substantially determined by the reduction of effect time on produced pulps of light, oxygen and atmospheric air. But further and especially for the olive pulps and pastes the most severe degradation results during the de-bittering process in brine since, by having the need for frequent rinsing with large quantities of water, the hydrophilic polyphenols are significantly removed gradually during rinsing at frequent brine water replacements .

Today the hydraulic direct cold press pulping methods includes the following steps (a) Unloading the fruits at the place of processing (b) Storage (c) Removal of leaves and of small pieces of branches (d) Washing (e) removal of kernel (only for fruits with large sized kernel that can be mechanically removed ) (f) Pulping of fruit mass inside the compression cylinder (g) optional De-bittering of oily pulp in case of processing olives and (h) storage of pulps in large cooled containers/tanks for further nutritional processing as eventually transferred to other industrial processing place . Of course for the production of pastes , the pulping process incorporates Pasteurization on the produced pulps .

Today the established oil extraction method of two place decanter centrifugation includes the following steps : (a) Unloading the fruits at the place of processing (b) Storage (c) Removal of leaves and of small pieces of branches (d) Washing (e) removal of kernel (only for fruits with large sized kernel that can be mechanically removed ) (f) Milling with eventual use of water (g) Malaxation (h) two phase decanter centrifugation of malaxed oily mass for the extraction of oil and for the co-production of remaining watery pomace (i) Oil / Water separation for the removal any water content from the extracted oils from the Decanter (j) optionally and Filtering of produced oils for the removal of any very small sized solids (k1) storage of oils in large containers/tanks and disposal in the Market (k2) disposal of waste watery pomace , as extracted by two phase decanter centrifugation method ,with its transfer to olive kernel oil plants or other Plants for non-nutritional and of lower importance utilization .

The objective of the invention is on one hand a new pulping method resulting by the novel hybridization of direct cold press pulping method with the two phase decanter centrifugation oil extraction method , and on the other hand the production with this hybrid method of novel Pulps and Pastes having low oil content, so that (a) the overall mass-wise nutritional production efficiency of hybrid method is more than double of that of decanter centrifugation oil extraction methods (b) there is no need for using additional processing water that is required in both Milling and Malaxation phases of established decanter centrifugation oil extraction methods and (c) especially for olive fruit processing, the need for transferring disposed waste olive pomace to olive kernel oil plants is avoided, offering a very high environmental relief to olive production countries .

The intended purpose of the applicant is the synchronous co-production of oils and pulps from any kind of fruit with oily flesh , so that under an environmentally friendly manner to attain maximization of mass-wise nutritional production efficiency .

The objective of the invention is achieved with replacing the milling step (required for the production of oily fruit dough) of two phase centrifugation oil extraction method by the pulp production steps of hydraulic direct cold press pulping method . In this manner, the rotating malaxing machine (that implements the malaxation step) is fed with the produced pulp from the hydraulic press of the hydraulic direct cold press pulping method . The main result of this hybridization between a primary pulping method and a secondary oil extraction method, is that the two phase decanter centrifuge synchronously co-produces fruit oils (liquid phase/product) and novel oily pulps of low oil content (solid phase / semi-fluid product) . The balance process for the produced novel pulps of low oil content will be either that of pasteurization and optionally de-bittering (for some varieties of olive fruit having very high phenolic content) for the production of novel pastes of low oil content or that of mixing the pulps with other ingredients for the production of multi-ingredient foods . (mainly belonging to the family of food products that is established in the market with the name "Spread") . But also with this hybridization (a) it is avoided the nutritionally and process-wise meaningless addition of water that degrades the pulp quality due to degradation of hydrophilic phenolic content and (b) it is attained the environmentally friendly disposal of the overall waste (fruit kernels and peels resulting out from the hydraulic press ) that concerns dried non nutritional mass ideal for biomass uses .

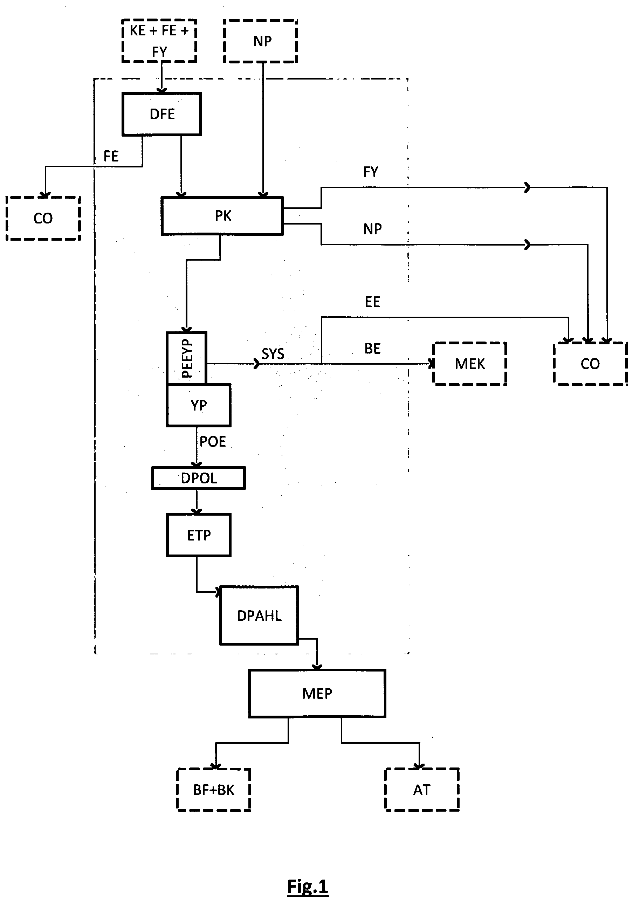

However, the invention is explained in more detail on the basis of one example that concerns the production of novel low oil content olive pulps and pastes by hybridizing the hydraulic direct cold press pulping method with the two phase decanter centrifuge oil extraction method . The diagrams that depict overall the hydraulic direct cold press method , the two phase decanter centrifugation oil extraction method and the hybridism of those two methods , are shown on Fig.1 /Fig.2 & Fig.3 .

The coding of the Equipment, Machinery and other components constituting the movable laboratory, as used in Fig.1 / Fig.2 and Fig.3 , is as follows:
- (KE) :: Olive Fruit
- (FE) :: Olive Leaf
- (FY) :: Inert Matter
- (NP) :: Washing Water
- (ZO) :: Fodder
- (KOY) :: Olive Kernel
- (CO) :: Land / Soil
- (SYS) :: Solid Residues of Hydraulic Compression
- (YY) :: Liquid Residues
- (LE) :: Olive Oil
- (POE) :: Pulp of Total Oil Content
- (PAOE) :: Paste of Total Oil Content
- (PXE) :: Pulp of Low Oil Content
- (PAXE) :: Paste of Low Oil Content
- (PYEL) :: Olive Kernel Oil
- (PYELP) :: Olive Kernel Oil Plant
- (LP) :: Liquid Phase
- (SP) :: Solid Phase
- (YP) :: Hydraulic Press
- (FDEYY) :: Oil / Residual Liquid Waste Centrifugal Separator Machine
- (PK) :: Fruit Washing Machine
- (SK+AK) :: Fruit Milling/Crushing Machine
- (DFE) :: Olive Leaf Separator Machine
- (ETP) :: Olive Pulp De-bittering & Pasteurization Machine
- (MA) :: Olive Dough Malaxing Machine
- (DFD) :: Two Phase Decanter Centrifuge Separator Machine
- (DPOL) :: Pulp Storage Tank of Hourly Operation
- (DPHL) :: Pulp Storage Tank of Daily Operation
- (DPAHL) :: Paste Storage Tank of Daily Operation
- (DEHL) :: Oil Tank of Daily Operation
- (DKHL) :: Liquid Waste Tank of Daily Operation
- (XAEP65):: Storage Area of Olive Pomace
- (BE) :: Basic choice (for the process of the product or residue).
- (EE) :: Alternative choice (for process of the product or residue)
- (BF+BK) :: Pharmaceutical Industry / Cosmetics Industry
- (AT) :: Food Market
- (PEEYP) :: Platform for input and output solid organic matter of Hydraulic Press
- (PYPEL) :: Olive Kernel Oil Plants
- (MEYY) :: Liquid Waste Processing Plant
- (EP65) :: Olive Pomace with water content in the range of 65%
- (EP15) :: Olive Pomace with water content in the range of 15%
- (EAB) :: Biomass Energy Market
- (MEP) :: Pulp and Paste Processing & Packaging Plant
- (MEE) :: Olive Oil Processing and Packaging Plant
- (MEK) :: Olive Kernel Processing Plant.

The Diagram in Fig.1 depicts the pulping process that is implemented by using the Hydraulic Direct Cold Method , where the gathered raw olive fruit (KE) (usually placed in baskets or sacks ) as being untreated and mixed with olive leafs (FE) and inert matter (FY) , is transferred to the Olive Fruit Pulping & Pasting Plant. In the Plant the untreated raw olive fruits are gradually unloaded in a hopper and from there via conveyer belts are forwarded to the Leaf Separator Machine (DFE). After separation the olive fruits are forwarded to the washing machine (PK) and after washing via conveyor belts to the compression cylinder of Hydraulic Press (PK) . The hydraulic compression produces olive pulp that is considered as pulp of total oil content (POE) , since contains almost the whole of the oil that is contained in the processed olive fruits ( a very small oil content is lost as enclosed inside olive peel that is rejected from Compression Cylinder along with Kernels ) . The pulp (POE) is forwarded to the storage tank of hourly operation (DAOL) and from there to the De-bittering and Pasteurization Machine (ETP) for the production of Olive Paste . The produced paste is also paste of total oil content (PAOE) since derived directly from pulps of total oil content (POE). The produced paste (PAOE) is stored in the paste tank of daily operation (DPHL) and from there as subject of the type of processing is transferred either to Pulp and Paste Processing & Packaging Plants for the production of food market (AT) products , or to Pharmaceutical and Cosmetics Industrial Plants (BF+BK) for the production of medicines and cosmetics. The washing water (NP), the olive leafs (FE) and the inert matter (FY) are considered environmentally friendly matter and is disposed to the field of olive trees .The solid waste (SYS) of hydraulic compression, since comprising only olive kernel and olive fruit peel , is either disposed to the field of olive trees or transferred to Olive Kernel Processing Plants (MEK) for the production of organic olive kernel oil .

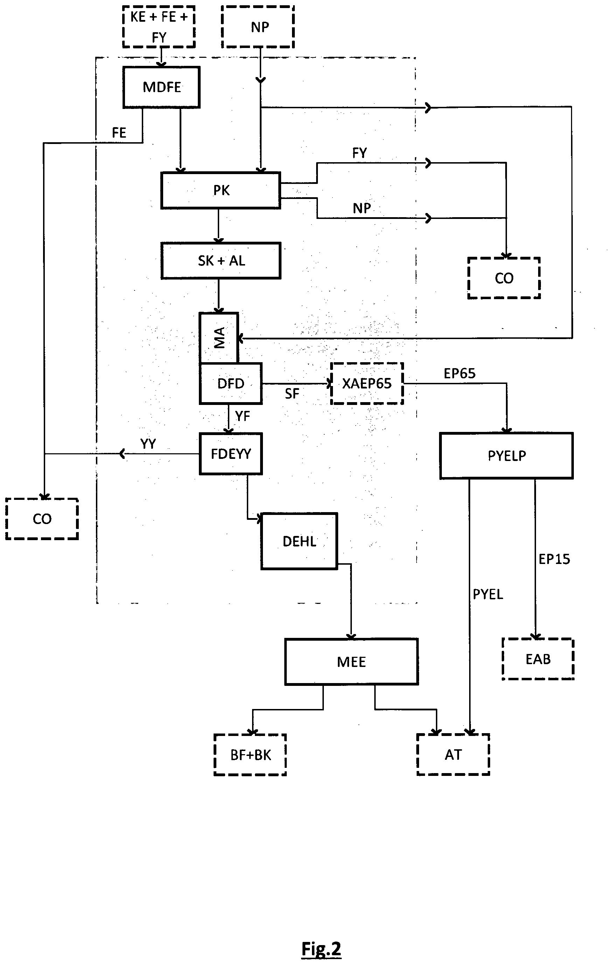

The Diagram in Fig.2 depicts the oil extraction process that is implemented by using the two phase decanter centrifugation method , where the gathered raw olive fruit (KE) (usually placed in baskets or sacks ) as being untreated and mixed with olive leafs (FE) and inert matter (FY) , is transferred to the the Olive Oil Extraction Plant. In the Plant the untreated raw olive fruits are gradually unloaded in a hopper and from there via conveyer belts are forwarded to the Leaf Separator Machine (DFE) . After separation the olive fruits are forwarded to the washing machine (PK) and after washing via conveyor belts to the Milling Machine ( SK+AK) where the olive fruit is converted to olive dough . From there the olive dough is forwarded via conveyor belts to the Olive Dough Malaxation Machine (MA) for the homogenisation of olive mass with also using some quantity of additional water (NP) for assisting malaxation efficacy . Then the resulting homogenized olive dough is directly forwarded to the Teo Phase Decanter Centrifuge ( DFD) for the separation of the liquid phase (YF) from the solid phase (SF) . The liquid phase is concerns untreated olive oil that is forwarded to Oil / Residual Liquid Waste Centrifugal Separator Machine (FDEYY) for the separation of olive oil (LE) from water content / liquid residues (YY) . The produced oil is stored in Tanks of Daily Operation (DEHL) and from there is transferred either to Olive Oil Processing and Packaging Plants (MEE) for the production of food market (AT) products, or to Pharmaceutical and Cosmetics IndustriaL Plants (BF+BK) for the production of medicines and cosmetics . The washing water (NP), the olive leafs (FE), the inert matter (FY) and the liquid waste (YY) are considered environmentally friendly matter and is disposed to the field of olive trees . The solid phase (SF) that is rejected from the two phase decanter centrifuge machine (DES), concerns the olive pomace (EP65) that environmentally has been widely established to be disposed to Olive Kernel Oil Plants (PYELP) for the co-production of (a) very low nutritional quality kernel oil (PYEL), since using chemical like Hexane C₆H₁₄ and applying extra high temperatures and (b) dried olive pomace (EP15) that as a biomass is mostly used in the market (EAB) as "pomace wood" as an environmental energy alternative of conventional wood chip. So It is obvious that since the mass of pomace (EP65) includes the whole of the mass of olive kernels and olive fruit peels , this residual mass cannot be used for any other nutritional application except the one of extracting the non-organic (since of very low nutritional quality) olive kernel oil (PYEL).

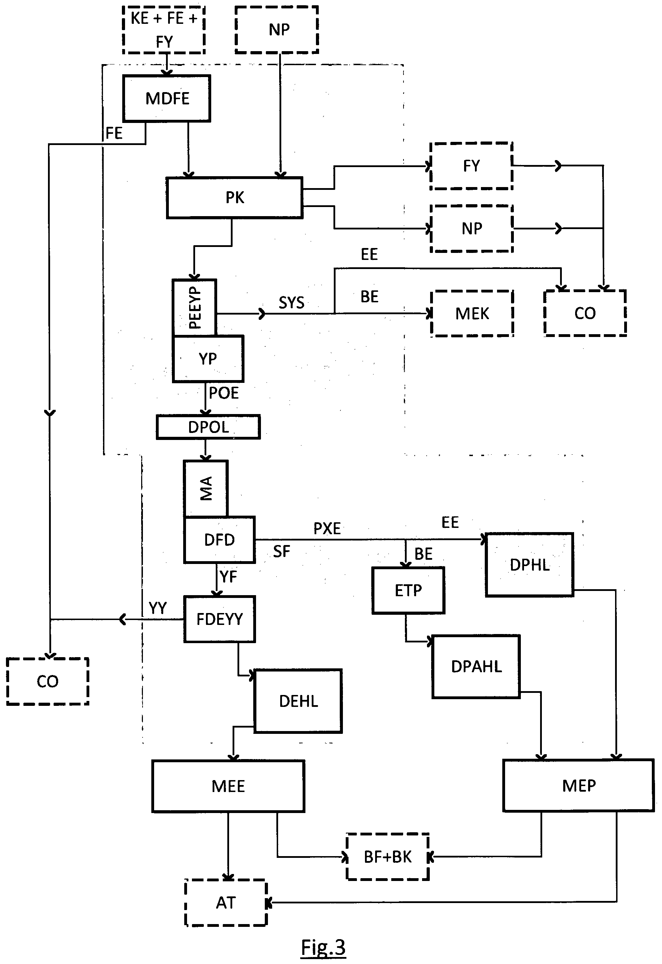

The Diagram in Fig.3 depicts the oil Overall hybridism of hydraulic direct cold press pulping method with two phase decanter centrifugation method . By the step of producing the pulp (POE) the procedure is the same to that presented in Fig.1 . By avoiding the Milling / Crushing step and the respecting Milling Machine ( SK+AK) , olive pulp (POE) is forwarded directly to the Malaxation Machine (MA) where without using water (NP) like happens in the conventional decanter centrifuge oil extraction methods . The balance process for the malaxed pulp (POE) towards the olive oil extraction , is the same to that depicted in Fig.2 since instead of having olive dough we have olive pulp (POE) , that is treated in the same manner by the Two Phase Decanter Centrifuge Machine (DFE ). The co-produced pulp (PXE) that itself concern a nutritional product and an independent ingredient for the food industry, is stored in Tanks of Daily Operation (DPHL) and optionally transferred to Pulp and Paste Processing & Packaging Plans (MEP) to be used as mixing ingredient for the production of complex multi-ingredient nutritional products. Alternatively the co-produced pulp (PXE) is forwarded to the Olive Pulp De-bittering & Pasteurization Machine (ETP) for simultaneous debittering (with organic enzymes) and pasteurization, for the production of paste (PAXE) of low oil content. The paste (PAXE) is stored on Tanks of Daily Operation (DPAHL) and transferred to Paste Processing & Packaging Plans (MEP) where there can either be used as independent nutritional products or like pulps (PXE) as ingredient for the production of complex multi-ingredient nutritional products.

The novelty of the hybridism lies on that the matter that concerns the co-produced solid phase (SF) (of hybrid two phase decanter centrifuge oil extraction) does not contain non-nutritional elements like happens with olive pomace (EP65) of conventional olive oil extraction , since olive kernel and olive peel (that frequently is severely affected by insects and involve the risk of being nutritionally dangerous) are collected inside compression cylinder of Hydraulic Press (HP) . This nutritional mass (SF) concerns the novel pulp of low oil content (PXE) that is co-produced with the extracted oil, makes the overall mass-wise nutritional efficiency of hybrid process to be more than double than that of market established oil extraction methods . Overall the olive oil quantity is around the same between the quantity produced by the two phase centrifuge oil extraction method under Fig.2 and that of hybrid process under Fig.3 , but in the case of hybrid process the overall oil quantity is shared between a large quantity of pure oil (that is separated and collected in storage tanks) and a much smaller quantity of oil that is culturally enclosed inside the co-produced pulp (PXE) and this explain the attribute "pulp with low oil content" or "pulp of low oil content" .

Novel pulps (PXE) and pastes (PAXE) of low olive content that are co-produced with oils , consider a new wide food category that is not only horizontally dependent on the fruit tree family (indicatively "Oleaceae" that is the family in which belong the Olive Trees) but also vertically dependent on the fruit tree variety in each specific family (indicatively " Olea europaea " variety belonging to "Oleaceae" family) . This is very important since there are significant differences in the composition of nutritionally qualitative fruit ingredients not only inside each family but also inside its specific variety. In this way and having analysed and record the specific characteristics of each oily tree variety , the respecting food products that are produced by using pulps of low oil content (PXE) but even the pastes of low oil content (PAXE), will be designed so to focus to specific nutritional and even health needs of various categories of consumers . The pulps of low oil content (PXE) not only can be used for the production of conventional food products like those belonging to "Spread" food category , but due to their high content in qualitative substances like polyphenols , they can also be used for the production of antioxidant food supplements .

## Claims

1. Method of processing fruits with oily flesh for the producing of pulps with low oil content, by hybridizing the direct cold press pulping method with the two phase decanter centrifugation oil extraction method ,by which method it is attained (a) the co-production of fruit oils (b) the avoidance of milling processing step for the production of oily fruit dough (c) the avoidance of any water use during malaxation processing phase (d) the attainment for the hybrid pulping method to has more than double overall mass-wise nutritional production efficiency as compared to that of decanter centrifugation oil extraction methods and (e) especially for olive fruit, the avoidance of having watery solid waste like olive pomace and so for any environmental dependence on olive kernel oil plants .

2. Organic food category of fruit pulps with low oily content (PXE) that are produced by the hybrid method according to claim No.1. Pulps (PXE) are **characterized by** that they are synchronously co-produced with fruit oils , so that the overall co-produced nutritional mass of fruits oil and pulp (PXE) is more than double than that of produced oil by conventional decanter centrifugation oil extraction methods . Pulps (PXE) are utilized on one hand for the production of multi-ingredient food product and on the other hand for the production of antioxidant food supplements . Food category of pulps (PXE) is categorized both horizontally as dependent on the fruit tree family and vertically as dependent on the fruit tree variety in each specific family.

3. Organic food category of fruit pastes with low oil content (PAXE), produced from fruit pulps (PXE) according to claim No.2 with applying to them pasteurization and eventually de-bittering as dependent on the phenolic content of olive fruit variety. Food category of pulps (PAXE) since resulting from (PXA) is also categorized both horizontally as dependent on the fruit tree family and vertically as dependent on the fruit tree variety in each specific family .
